Europäisches Patentamt

European Patent Office

Office européen des brevets

(19)

(11) EP 0 583 428 B1

(12) FASCICULE DE BREVET EUROPEEN

(45) Date de publication et mention
de la délivrance du brevet:
**25.06.1997 Bulletin 1997/26**

(21) Numéro de dépôt: **92917280.7**

(22) Date de dépôt: **29.04.1992**

(51) Int Cl.6: **C09J 103/02**

(86) Numéro de dépôt international:
**PCT/FR92/00382**

**WO 92/19690 (12.11.1992 Gazette 1992/28)**

(54) **COMPOSITIONS ADHESIVES THERMOFUSIBLES A BASE D'UN COMPOSE AMYLACE**

SCHMELZKLEBSTOFFZUSAMMENSETZUNGEN AUF DER BASIS EINES STÄRKEPRODUKTES

STARCHY COMPOUND BASED HOT-MELT ADHESIVE COMPOSITIONS

(84) Etats contractants désignés:
**BE CH DE FR GB IT LI LU NL PT**

(30) Priorité: **29.04.1991 FR 9105249**

(43) Date de publication de la demande:
**23.02.1994 Bulletin 1994/08**

(73) Titulaire: **Roquette Frères**
**F-62136 Lestrem (FR)**

(72) Inventeurs:
• **GOSSET, Serge**
**F-62136 Lestrem (FR)**
• **LEFER, Pierre**
**F-59660 Merville (FR)**

(74) Mandataire: **Ahner, Francis**
**CABINET REGIMBEAU**
**26, avenue Kléber**
**75116 Paris (FR)**

(56) Documents cités:
**EP-A- 0 327 505**          **EP-A- 0 400 531**
**DE-A- 1 960 528**          **GB-A- 1 014 801**
**US-A- 2 127 540**          **US-A- 3 574 153**

• **CHEMICAL ABSTRACTS, vol. 67, no. 8,**
**Columbus, Ohio, US; abstract no. 34043Q,**
**&US66 O8467**
• **WORLD PATENTS INDEX LATEST Section Ch,**
**Week 8331, Derwent Publications Ltd., London,**
**GB; Class A, AN 83-726617**

Remarques:
Jointe à la demande no. 92401215.6/0511916
(numéro de dépôt/numéro de publication de la
demande européenne) par décision du 23.02.95.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 583 428 B1

## Description

L'invention concerne une composition adhésive thermofusible à base d'au moins 40 % en poids d'au moins un composé amylacé, et au moins un agent de texture dont la concentration relative par rapport à l'eau est supérieure ou égale à 30 % environ.

Elle concerne également le procédé d'obtention d'une telle composition, ainsi que les applications de ladite composition.

Les colles thermofusibles, ou "hot-melt", sont des matériaux thermoplastiques qui se présentent sous forme solide à température ambiante et qui fondent comme de la cire lors d'une élévation de température.

Par "hot-melt", on entend donc ici des compositions adhésives thermofusibles possédant les caractéristiques sus-mentionnées et détaillées ci-après.

Sous l'effet du chauffage lors de sa mise en oeuvre, l'adhésif passe de l'état solide à l'état liquide, puis se solidifie lors du refroidissement. La température de fusion varie en général entre 150 et 220°C : l'adhésif devient alors suffisamment fluide pour être appliqué sur un substrat. La prise de colle intervient en quelques secondes en se refroidissant.

Cette forme d'adhésif présente l'avantage de limiter le recours à des solvants pour leur formulation. Les problèmes d'évaporation étant supprimés, les cadences de collage peuvent être très rapides, et ceci sur tous types de matériaux.

Les applications industrielles des adhésifs hot-melt sont multiples. On peut citer l'emballage (caisses et étuis en carton, sacs et sachets, étiquetage, collage des charges palettisées), l'industrie du bois (placage), l'industrie des non-tissés (produits d'hygiène tels que les couches-culottes), la reliure des livres et des revues, l'industrie automobile et l'industrie électrique.

En ce qui concerne le domaine de l'emballage et plus particulièrement de l'étiquetage, celui-ci est un secteur pour lequel il existe des contraintes élevées de résistance à des températures extrêmes (températures de pasteurisation et de réfrigération des produits après étiquetage des contenants), contraintes auxquelles doivent pouvoir répondre les hot-melts.

Par ailleurs, les cadences imposées par la rentabilité économique nécessitent la mise en oeuvre de colles thermofusibles aux caractéristiques rhéologiques parfaitement adaptées.

Les colles thermofusibles sont en général constituées d'un polymère de base, d'un plastifiant, d'un tackifiant et éventuellement de cires, de stabilisants et de charges. Le polymère de base est le constituant principal, puisque c'est lui qui détermine les caractéristiques de stabilité à la chaleur et d'adhésivité de la colle. Il doit être compatible avec les autres constituants de la composition, posséder une bonne stabilité à l'état fondu, présenter une bonne adhésion sur une grande variété de substrats et donner des joints permettant une bonne adhésivité.

De plus, ses propriétés rhéologiques, et en particulier sa viscosité à chaud conditionnent le type d'utilisation du hot-melt.

Les polymères déjà proposés à cet effet sont notamment les copolymères éthylène-acétate de vinyle, et éthylène-acrylate d'éthyle, les polyoléfines (polyéthylène principalement), les polyamides, les polyesters, les polyesters-amides, le styrène, le copolymère styrène-butadiène et l'isoprène.

Le plastifiant donne une certaine souplesse au film adhésif, tandis que le tackifiant augmente la capacité d'adhérence immédiate.

Les cires ont tendance à diminuer la viscosité à l'état fondu.

A titre d'illustration des compositions de l'art antérieur, on peut citer la demande française n° 2 378 835 (DUPONT DE NEMOURS), dans laquelle la composition adhésive, qui peut être fusible à chaud, est constituée d'un polymère choisi parmi l'alcool polyvinylique et les copolymères éthylène-alcool vinylique, d'un solvant de ce polymère et d'un agent diluant pour réduire la viscosité. Ce diluant peut être l'eau.

Le brevet américain n° 4 536 012 (H.B. FULLER Cie) protège un procédé pour relier des livres, qui consiste notamment, après application d'une première couche destinée à former un film flexible uniforme, à recouvrir celle-ci d'une colle hot-melt constituée d'un polymère (copolymère éthylène-acétate de vinyle, copolymère styrène-isoprène, polyamides, polyisobutylène, polyacrylates, polyesters) et d'une cire ou d'une résine tackifiante.

Cependant, l'utilisation de polymères synthétiques dans les adhésifs thermofusibles présente souvent un inconvénient majeur, qui est la non-dégradabilité. Cet inconvénient est déterminant, puisqu'il constitue un obstacle au recyclage du substrat. Ce problème est particulièrement aigu dans le domaine de la reliure, en ce qui concerne le recyclage du papier.

Les préoccupations économiques et écologiques ne sont donc pas favorables au développement des hot-melts à base de ces polymères synthétiques.

Des mélanges de polymères synthétiques et naturels ont été proposés pour pallier cet inconvénient. Ainsi, le brevet américain n° 3 574 153 (NATIONAL STARCH and CHEMICAL Cie) revendique une composition adhésive hot-melt, remouillable à l'eau, constitué d'acétate de polyvinyle partiellement hydrolysé et d'un polymère hydrosoluble qui est, de préférence, une dextrine ou un dérivé de l'amidon. Toutefois, ces mélanges, s'ils permettent d'obtenir un joint de colle facilement destructible, restent non bio-dégradables. D'autre part, pour obtenir une homogénéité satisfaisante de tels mélanges, il est nécessaire de recourir à des conditions énergétiques difficilement applicables industriellement.

Dans un autre brevet américain n° 3 474 055 (SUN OIL COMPANY), une composition adhésive hot-melt à base d'une résine de type formolite, d'un copolymère éthylène-acétate de vinyle et d'un composé polyhydroxy est revendiquée. Ce composé, qui peut être un polyol ou un saccharide, ne représente qu'une proportion mineure de la composition par rapport aux deux autres constituants. En outre, les polyols ou les saccharides visés ont une chaîne carbonée qui ne possède pas plus de 18 atomes de carbone.

Si certains polymères hydrosolubles tels que l'amidon et ses dérivés possèdent effectivement un caractère parfaitement biodégradable, leur mise en oeuvre dans des compositions aqueuses pose d'importants problèmes à haute température. Ces problèmes sont dûs essentiellement à la vaporisation de l'eau présente dans la composition qui, d'une part, provoque l'hétérogénéité du mélange lors du chauffage, et d'autre part, peut créer une phase vapeur entre la colle et les substrats, ce qui empêche alors l'application correcte de la colle.

Outre la stabilité à haute température, ces compositions aqueuses doivent par ailleurs répondre aux critères de rhéologie et d'adhésivité exigés.

Le problème était donc de réussir à concilier les exigences de la technique avec les préoccupations écologiques.

Or, la Demanderesse vient à présent de mettre au point des compositions adhésives thermofusibles à base de composé(s) amylacé(s) qui, outre leur caractère biodégradable, possèdent des propriétés adhésives tout à fait performantes dans les domaines industriels les plus variés.

Plus précisément, la présente invention a pour objet une composition adhésive caractérisée par le fait qu'elle contient au moins 40 % en poids d'au moins un composé amylacé, et au moins un agent de texture dont la concentration relative par rapport à l'eau est supérieure ou égale à environ 30 %.

La concentration relative de l'agent de texture par rapport à l'eau (C.R.) traduit le degré d'indisponibilité de l'eau dans la composition.

Elles s'exprime selon la formule suivante :

$$C.R. = \frac{A}{A+B} \times 100$$

avec

A = poids de matière sèche de l'agent de texture
B = poids d'eau totale dans la composition.

On souhaite donc une disponibilité de l'eau la plus faible possible afin d'éviter, lors de la mise en oeuvre de la composition, les phénomènes de vaporisation évoqués précédemment.

D'une manière encore plus préférentielle, la composition selon l'invention contient 40 à 95 % d'au moins un composé amylacé, et 5 à 60 % d'au moins un agent de texture dont la concentration relative par rapport à l'eau est supérieure ou égale à environ 50%.

La composition selon l'invention se présentera en particulier sous forme d'un mélange homogène.

Pour répondre aux exigences de la technique et en particulier pour obtenir l'homogénéité satisfaisante indispensable à une bonne application, le composé amylacé doit se trouver dans un état partiellement ou totalement fondu.

Par le terme composé amylacé, au sens de la présente invention, on entend tout type d'amidon, quelle qu'en soit l'origine, modifié par voie chimique. Ce peut être un amidon naturel ou hybride, provenant du maïs, du maïs à haute teneur en amylopectine (amidon waxy), du maïs à haute teneur en amylose, du blé, du riz, du pois, de la pomme de terre, du manioc, les coupes ou fractions qui peuvent en être faites ou obtenues et les mélanges quelconques d'au moins deux quelconques des produits susmentionnés.

Cet amidon sera choisi dans le groupe comprenant les amidons hydrolysés puis hydrogénés.

Les hydrolysats d'amidon utilisables sont obtenus, de manière en elle-même connue, par hydrolyse enzymatique et/ou acide d'un lait d'amidon, le degré d'hydrolyse étant généralement caractérisé par le Dextrose-Equivalent (DE), défini comme étant le pouvoir réducteur de l'hydrolysat, exprimé en D-Glucose et rapporté à la matière sèche.

Les hydrolysats d'amidon ont un DE compris entre 20 et 50.

Suivant le mode d'hydrolyse utilisé (type d'enzymes par exemple) et suivant le degré d'hydrolyse, on peut obtenir des hydrolysats d'amidon de différents DE ayant une distribution très variée en produits de différents degrés de polymérisation : glucose (DP 1), maltose et isomaltose (DP 2), maltotriose (DP 3), oligosaccharides et polysaccharides.

Les hydrolysats d'amidon de composition variée ainsi obtenus sont alors hydrogénés, de manière connue en soi, généralement sous des pressions d'hydrogène et à des températures élevées et en présence de catalyseurs comme par exemple le nickel de Raney. Les différents sucres constituant l'hydrolysat d'amidon sont ainsi transformés en polyols correspondants.

Les conditions d'hydrogénation sont choisies pour que l'hydrolysat d'amidon hydrogéné utilisé pour la constitution des compositions adhésives thermofusibles conformes à l'invention présente un pourcentage de sucres réducteurs inférieur à 5 % (pourcentage exprimé sur la matière sèche de l'hydrolysat), de préférence inférieur à 2 % et plus préférentiellement encore inférieur à 0,5 %.

Ces hydrolysats d'amidon peuvent être modifiés par voie chimique, ces modifications intervenant avant ou après hydrogénation. Il est fait appel pour cela aux techniques connues d'éthérification, d'estérification, de réticulation et/ou d'oxydation.

L'agent de texture présent dans la composition selon l'invention confère à celle-ci un profil de viscosité en fonction de la température, adapté aux exigences de la technique.

Cet agent de texture peut être un agent plastifiant, un agent lubrifiant, un diluant et/ou un agent tackifiant.

L'agent de texture peut être choisi parmi les sucres hydrogénés et notamment le sorbitol, le mannitol, le maltitol, le lactitol, les sels d'acide hydroxycarboxylique, l'urée et ses dérivés, le talc, les stéarates, la glycérine, les glycols et les cires.

De manière préférentielle, les sucres hydrogénés et notamment le sorbitol et le mannitol seront utilisés.

L'agent de texture représente de préférence 5 à 60 % du poids total de la composition selon l'invention.

Enfin, les compositions selon l'invention peuvent également contenir une ou plusieurs résines naturelles ou synthétiques, les résines naturelles pouvant éventuellement être modifiées chimiquement.

Pour conserver un caractère biodégradable intéressant aux compositions adhésives selon l'invention, on choisira de préférence des résines naturelles telles que par exemple celles dérivées de la colophane.

La composition conforme à l'invention peut également contenir un ou plusieurs adjuvants notamment des promoteurs d'adhérence tels que des dérivés de silane, des agents antioxydants, des pigments et/ou des parfums.

Comme cela a été dit précédemment, la composition selon l'invention se présente en particulier sous forme d'un système homogène.

L'homogénéité de la composition, constituée d'au moins un composé amylacé, d'au moins un agent de texture et éventuellement d'une résine et/ou d'un ou plusieurs adjuvants est obtenue par un traitement adapté, lors de sa préparation.

Ce traitement consiste en une opération de mélange pouvant faire appel à un traitement thermique et/ou à un traitement sous pression ou encore à tout autre moyen apte à rendre le mélange homogène. A titre d'exemple de tels traitements, on peut citer, la fusion, la cuisson-extrusion, le passage sur tambour sécheur et le compactage.

Le traitement d'homogénéisation consistera de préférence en une fusion du mélange des différents constituants de la composition. Cette fusion sera obtenue par chauffage à une température pouvant atteindre 200°C, sous agitation constante.

Les compositions selon l'invention qui se présentent sous forme solide, par exemple sous forme de granulés, pastilles, bâtonnets, pains et plaquettes sont mises en oeuvre selon les techniques classiques d'application des hot-melts. Le matériel utilisé peut être un système à réservoir ou bac de fusion, ou bien un pistolet à chauffage.

Dans les systèmes à réservoir, l'application s'effectue par une ou plusieurs buses distributrices automatiques.

Les pistolets sont des systèmes applicateurs en continu, qui intègrent le logement de la composition solide, la chambre de fusion, le système d'entraînement et la buse de sortie. Certains pistolets peuvent être alimentés à partir de réservoirs.

Le dépôt sur le substrat s'effectue par extrusion ou par transfert. Dans le premier cas, la composition adhésive est chauffée puis transportée jusqu'à une ou plusieurs buses dans lesquelles s'effectue l'extrusion qui donne un boudin compact semi-cylindrique continu ou discontinu de la composition.

L'application par transfert est assurée par un contact tangentiel entre le substrat et un disque ou cylindre, qui trempe dans le bain de la composition adhésive.

Les compositions adhésives thermofusibles obtenues conformément à l'invention peuvent être appliquées dans les domaines industriels les plus variés, et notamment l'emballage, les industries de la reliure et du non-tissé.

Les caractéristiques adhésives et les qualités rhéologiques des compositions selon l'invention ont été mesurées pour différentes compositions illustrées dans les exemples qui suivent.

## Exemples 1 à 3

Les compositions des exemples 1 à 3 font intervenir des composés amylacés hydrolysés. Dans ce cas, le traitement d'homogénéisation est constitué par un traitement thermique sous agitation assurant la co-fusion des différents constituants de la composition.

**A - Préparation**

**Exemple 1**

On prépare une composition adhésive thermofusible en mettant en oeuvre les constituants suivants (les quantités étant exprimées en poids sec) :

|  | Parties en poids |
|---|---|
| * Hydrolysat d'amidon (DE moyen 37) hydrogéné tel que le POLYSORB ® 70/12/12 fabriqué par la Société Demanderesse | 80 |
| * Mannitol | 20 |

Les constituants sont introduits dans un récipient, et le mélange est porté progressivement et sous agitation constante jusqu'à une température d'environ 180°C, la durée totale de chauffe étant d'environ 2 heures et 30 minutes.
Le mélange fondu ainsi obtenu est alors versé dans des moules en aluminium.

**Exemple 2**

De la même manière, on prépare une composition adhésive thermofusible selon l'invention, à partir des constituants suivants :

|  | Parties en poids |
|---|---|
| * POLYSORB ® 70/12/12 | 80 |
| * Mannitol | 20 |
| * Résine de colophane distillée sous vide telle que le produit RESIGRAL (DRT) | 30 |
| * Ester époxyalkylsilane tel que le produit A-187 (UNION CARBIDE) | 2 |

**Exemple 3**

De la même manière, on prépare composition adhésive thermofusible selon l'invention, à partir des constituants suivants :

|  | Parties en poids |
|---|---|
| * POLYSORB® 70/12/12 | 80 |
| * Sorbitol | 20 |
| * RESIGRAL | 20 |
| * A-187 | 1 |

Dans cette dernière composition, le dérivé de silane (A-187) est introduit en final, après mélange et fusion des autres constituants dans les conditions décrites précédemment.
Après son ajout, le chauffage est maintenu à environ 180°C, sous agitation constante pendant encore 10 minutes.

**B - Caractérisation des colles thermofusibles des exemples 1 à 3**

Dans ces trois cas exemplifiés, les éprouvettes obtenues après refroidissement et démoulage présentent un aspect tout à fait satisfaisant.
Les viscosités à 155°C des trois compositions exemplifiées ont été mesurées, et des essais de collage sur différents supports ont été réalisés.

Les résultats sont rassemblés dans le Tableau II ci-après.

TABLEAU II

| Exemple | 1 | 2 | 3 |
|---|---|---|---|
| Viscosité à 155°C | 3 750 CP | 5 000 CP | 13 000 CP |
| Collage : papier couché (90g/M2)/idem | BON | BON | BON |
| papier kraft couché polyéthylène/idem | BON | BON | BON |
| papier kraft couché polyéthylène/verre | BON | BON | BON |
| papier kraft couché polyéthylène/P.E.T.* | BON | BON | BON |

\* polyéthylène téréphtalate

**Revendications**

1. Composition adhésive thermofusible caractérisée par le fait qu'elle contient au moins 40% en poids d'au moins un composé amylacé choisi dans le groupe comprenant les hydrolysats d'amidon présentant un Dextrose-Equivalent (DE) compris entre 20 et 50, hydrogénés, et au moins un agent de texture dont la concentration relative par rapport à l'eau est supérieure ou égale à 30% environ.

2. Composition selon la revendication 1, caractérisée par le fait qu'elle contient 40 à 95% en poids d'au moins un composé amylacé et 5 à 60% d'au moins un agent de texture dont la concentration relative par rapport à l'eau est supérieure ou égale à environ 50%.

3. Composition selon l'une des revendications 1 et 2, caractérisée par le fait qu'elle se présente sous forme d'un solide homogène.

4. Composition selon l'une des revendications 1 à 3, caractérisée en ce que l'agent de texture est choisi parmi les sucres hydrogénés et notamment le sorbitol, le mannitol, le maltitol, le lactitol, les sels d'acide hydroxycarboxylique, l'urée et ses dérivés, le talc, les stéarates, la glycérine, les glycols et les cires.

5. Composition selon la revendication 4, caractérisée en ce que l'agent de texture est choisi parmi le sorbitol et le mannitol.

6. Composition selon l'une des revendications 1 à 5, caractérisée en ce qu'elle contient en outre une ou plusieurs résines naturelles éventuellement modifiées, et/ou une ou plusieurs résines synthétiques, et/ou au moins un adjuvant choisi parmi les promoteurs d'adhérence, les agents anti-oxydants, les pigments et les parfums.

7. Procédé de préparation d'une composition adhésive thermofusible selon les revendications 1 à 6, caractérisé par le fait que l'on soumet un mélange contenant un composé amylacé et au moins un agent de texture dont la concentration relative par rapport à l'eau est supérieure ou égale à 30%, à un traitement d'homogénéisation.

8. Procédé de préparation selon la revendication 7, caractérisé en ce que le traitement d'homogénéisation est une cuisson-extrusion.

9. Procédé de préparation selon la revendication 7, caractérisé en ce que le traitement d'homogénéisation est un traitement thermique sous agitation assurant la co-fusion des différents constituants de la composition.

10. Utilisation d'une composition adhésive thermofusible selon l'une des revendications 1 à 6, ou préparée selon l'une des revendications 7 à 9, pour le collage industriel.

**Patentansprüche**

1.  Wärmeschmelzbare Klebstoffzusammensetzung, dadurch gekennzeichnet, daß sie mindestens 40 Gew.-% mindestens einer stärkehaltigen Verbindung, ausgewählt aus der Gruppe der hydrierten Stärkehydrolysate mit einem Dextrose-Äquivalent (DE) zwischen 20 und 50, und mindestens ein Texturierungsmittel, dessen Konzentration, bezogen auf Wasser, ≥ etwa 30% beträgt. enthält.

2.  Zusammensetzung nach Anspruch 1, dadurch gekennzeichnet, daß sie 40 bis 95 Gew.-% mindestens einer stärkehaltigen Verbindung und 5 bis 60 Gew.-% mindestens eines Texturierungsmittels enthält, dessen Konzentration, bezogen auf Wasser, ≥ etwa 50 % beträgt.

3.  Zusammensetzung nach einem der Ansprüche 1 und 2, dadurch gekennzeichnet, daß sie in Form eines homogenen Feststoffes vorliegt.

4.  Zusammensetzung nach einem der Ansprüche 1 bis 3, dadurch gekennzeichnet, daß das Texturierungsmittel ausgewählt wird aus der Gruppe der hydrierten Zucker und insbesondere aus Sorbit, Mannit, Maltit, Lactit, den Hydroxycarbonsäuresalzen, Harnstoff und seinen Derivaten, Talk, den Stearaten, Glycerin, den Glycolen und den Wachsen.

5.  Zusammensetzung nach Anspruch 4, dadurch gekennzeichnet, daß das Texturierungsmittel aus der Gruppe Sorbit und Mannit ausgewählt wird.

6.  Zusammensetzung nach einem der Ansprüche 1 bis 5, dadurch gekennzeichnet, daß sie außerdem ein oder mehrere gegebenenfalls modifizierte Naturharze und/oder ein oder mehrere Kunstharze und/oder mindestens ein Adjuvans, ausgewählt aus der Gruppe der Haftungspromotoren, der Antioxidationsmittel, der Pigmente und der Parfüms, enthält.

7.  Verfahren zur Herstellung einer wärmeschmelzbaren Klebstoffzusammensetzung nach den Ansprüchen 1 bis 6, dadurch gekennzeichnet, daß man eine Mischung, die eine stärkehaltige Verbindung und mindestens ein Texturierungsmittel enthält, dessen Konzentration, bezogen auf Wasser, ≥ 30 % beträgt, einer Homogenisierungsbehandlung unterwirft.

8.  Verfahren nach Anspruch 7, dadurch gekennzeichnet, daß die Homogenisierungsbehandlung eine Kochextrusion ist.

9.  Verfahren nach Anspruch 7, dadurch gekennzeichnet, daß die Homogenisierungsbehandlung eine thermische Behandlung unter Rühren ist, die das Miteinanderverschmelzen der verschiedenen Bestandteile der Zusammensetzung gewährleistet.

10. Verwendung einer wärmeschmelzbaren Klebstoffzusammensetzung nach einem der Ansprüche 1 bis 6 oder einer solchen, die nach einem der Ansprüche 7 bis 9 hergestellt worden ist, in der Klebstoffindustrie.


**Claims**

1.  Hot-melt adhesive composition characterized in that it contains at least 40 % by weight of at least one starchy compound chosen from the group including hydrogenated hydrolysates of starch exhibiting a Dextrose Equivalent (DE) of between 20 and 50, and at least one texture agent whose relative concentration in relation to water is higher than or equal to approximately 30 %.

2.  Composition according to Claim 1, characterized in that it contains 40 to 95 % by weight of at least one starchy compound and 5 to 60 % of at least one texture agent whose relative concentration in relation to water is higher than or equal to approximately 50 %.

3.  Composition according to either of Claims 1 and 2, characterized in that it is in the form of a homogeneous solid.

4.  Composition according to one of Claims 1 to 3, characterized in that the texture agent is chosen from hydrogenated sugars and especially sorbitol, mannitol, maltitol, lactitol, hydroxycarboxylic acid salts, urea and its derivatives, talc, stearates, glycerine, glycols and waxes.

5. Composition according to Claim 4, characterized in that the texture agent is chosen from sorbitol and mannitol.

6. Composition according to one of Claims 1 to 5, characterized in that it additionally contains one or a number of optionally modified natural resins and/or one or a number of synthetic resins and/or at least one adjuvant chosen from adhesion promoters, antioxidant agents, pigments and perfumes.

7. Process for the preparation of a hot-melt adhesive composition according to Claims 1 to 6, characterized in that a mixture containing a starchy compound and at least one texture agent whose relative concentration in relation to water is higher than or equal to 30 % is subjected to a homogenization treatment.

8. Process for preparation according to Claim 7, characterized in that the homogenization treatment is an extrusion-cooking.

9. Process for preparation according to Claim 7, characterized in that the homogenization treatment is a heat treatment with stirring ensuring the melting together of the various constituents of the composition.

10. Use of a hot-melt adhesive composition according to one of Claims 1 to 6, or prepared according to one of Claims 7 to 9, for industrial adhesive bonding.